# EUROPEAN PATENT SPECIFICATION

(11) **EP 1 782 885 B1**
(45) Date of publication and mention of the grant of the patent: **04.04.2012**
(21) Application number: 05110435.4
(22) Date of filing: 07.11.2005
(51) Int. Cl.: B01J 21/18, B01J 35/10, C07C 1/04, B01J 23/89, B01J 23/75, B01J 23/46

(54) **Carbon nanotubes supported cobalt catalyst for converting synthesis gas into hydrocarbons**
Kobaltkatalysator mit Kohlenstoffnanoröhren als Träger für die Umwandlung von Synthesegas in Kohlenwasserstoffe
Catalyseur à base de cobalt sur support en nanotubes de carbone pour transformer un gaz de synthèse en hydrocarbures

(43) Date of publication of application: 09.05.2007
(73) Proprietor: Research Institute of Petroleum Industry (RIPI), 1485733111 Tehran (IR)
(72) Inventor: Tavasoli, Ahmad, Narmak, Tehran (IR); Rashidi, Ali Morad, St. Shahid Nateghenoori St., Ashafi Esfehani Highway, Tehran (IR); Sadaghiani Zadeh, Kambiz, Tehran (IR); Karimi, Ali, Tehran (IR); Kodadadi, Abas Ali, Farahzadi Blv., Tehran (IR); Mortazavi, Yadollah, Farahzadi Blv., Tehran (IR)
(74) Representative: Fuchs

(56) References cited:
- WO-A-95/10481
- US-A- 4 088 671
- US-A- 5 569 635
- US-A1- 2003 121 826
- BEZEMER GL ET AL: "Cobalt supported on carbon nanofibers-a promising novel Fischer-Tropsch catalyst" STUDIES IN SURFACE SCIENCE AND CATALYSIS, ELSEVIER SCIENCE B.V., AMSTERDAM, NL, vol. 147, 2004, pages 259-264, XP009064770 ISSN: 0167-2991
- ZONG-JIAN LIU ET AL: "Co/CARBON-NANOTUBE MONOMETALLIC SYSTEM: THE EFFECTS OF OXIDATION BY NITRIC ACID" PHYSICAL CHEMISTRY CHEMICAL PHYSICS, ROYAL SOCIETY OF CHEMISTRY, CAMBRIDGE, GB, vol. 12, no. 3, 15 June 2001 (2001-06-15), pages 2518-2521, XP001141601 ISSN: 1463-9076
- LIU ZONG-JIAN ET AL: "Cyclohexanol dehydrogenation over Co/carbon nanotube catalysts and the effect of promoter K on performance" CATALYSIS LETTERS, SPRINGER, DORDRECHT, NL, vol. 72, no. 3-4, 2001, pages 203-206, XP002375754 ISSN: 1011-372X
- PLANEIX JM ET AL: "Applicaton of Carbon Nanotubes as Supports in Heterogeneous Catalysis" JOURNAL OF THE AMERICAN CHEMICAL SOCIETY, no. 17, 1994, pages 7935-7936, XP002375755 ISSN: 0002-7863
- STEEN VAN E ET AL: "Comparison of preparation methods for carbon nanotubes supported iron Fischer-Tropsch catalysts" CATALYSIS TODAY, AMSTERDAM, NL, vol. 71, no. 3-4, 1 November 2000 (2000-11-01), pages 327-334, XP002280026

## Description

The present invention relates to an improved cobalt catalyst which is useful to convert synthesis gas (syngas) during a Fischer Tropsch process into a mixture of hydrocarbons, preferrably into hydrocarbons having five or more carbon atoms. The catalyst according to the invention makes use of carbon nanotubes as a support material having an average surface area of from 600 to 900 m²/g and furthermore comprises cobalt and ruthenium and optionally oner or more alkali metal.

According to the prior art, varios attempts have been made to provide effective catalysts for selectively converting syngas to hydrocarbons. For example, cobalt containing catalysts are known in the art for use in Fischer-Tropsch synthesis. The cobalt catalysts described in the art are often similar, namely they all comprise cobalt as a primary FT metal and still further comprise a refractory oxide support with a high surface area and optionally comprise a second metal (such as Ru, Re or another noble metal) or an oxide promoter (e.g. lanthana or zirconia) or both.

There have been assiged numerous U.S. patents to Exxon describing FT processes using such catalysts and examples are US 5,258,411, US 5,268,344, US 5,283,216 and US 5,397,806. are mentioned. The catalysts described are composed of cobalt on a titania support.

Most of the patents assigned to Gulf and Chevron focus on alumina as support material and favour impregnation methods from organic solutions for preparation of the cobalt catalyst (see US 4,605,676, US 4,605,679, US 4,605,680, US 4,613,624).

Shell patented a number of cobalt catalysts for FT synthesis and related processes, such as EP 398 420 B1, EP 421 502 B1, EP 510 771 B1 and EP 510 772 B1. In these patents the prefered support for most of the catalysts is silica promoted with zirconium, titanium or chromium.

The cobalt catalysts patented by Statoil were all supported on alumina (see US 4,880,763, US 5,102,851 and US 5,116,879).

In the last few years also processes for producing cobalt-based FT catalysts have been disclosed in the patent literature, such as US 5,302,622 and EP 736 326 B1. The cobalt FT catalysts themselves do not differ much in composition from their predecessors, as mentioned before, new methods for preparing the same are disclosed in these patents.

The recently published US 2004/0147620 discloses a catalyst that includes a support material onto which support carbon nanotubes may be present to form a catalyst. The support material is described to be a ceramic or a thermally conductive material, such as a metal. The support is also described to be stainless steel or an alloy, such as monel. Support materials may be cordierite, silica, alumina, rutile, mullite, zirconia, silicon carbide, aluminosilicate, stabilized zironia, steel and alumina-zirconia blend.

The publication of Bezemer et al., "Cobalt supported on carbon nanofibers-a promising novel Fischer-Tropsch catalyst", Studies in Surface Science and Catalysis, 147, 2004, pages 259-264 discloses a catalyst comprising cobalt on carbon nanofiber and its use for the Fischer-Tropsch reaction. However, the additional use of ruthenium is not suggested by that document.

The publication of Zong-Jian Liu et al., "Co/carbon-nanotube monometallic system: The effects of oxidation by nitric acid", Phys. Chem. Chem. Phys., 3, 2001, pages 2518-2521 describes a catalyst comprising cobalt being applied on carbon nanotubes. However, the additional use of ruthenium is not suggested by that document.

The publication of Zong-Jian Lui et al., "Cyclohexanol dehydrogenation over Co/carbon nanotube catalysts and the effect of promoter K on performance", Catalysis Letters, 72, No. 3-4, 2001, pages 203-206 discloses the use of a catalyst comprising cobalt and carbon nanotubes as a support. However, the additional use of ruthenium Is not suggested by that document.

The publication of Planeix et al., "Applicaton of Carbon Nanotubes as Supports in Heterogeneous Catalysis", J. Am. Chem. Soc., 116, 1994, pages 7935-7936 describes a catalyst comprising ruthenium being applied on carbon nanotubes. However, the additional use of cobalt is not suggested by that document.

The document WO 95/10481 teaches a big variety of catalysts comprising carbon nanotubes However, the combination of cobalt and ruthenium is not disclosed in WO 95/10481.

The document US-A-5 569 635 describes a catalyst comprising ruthenium being applied on carbon fibers. However, the additional use of cobalt is not suggested by that document.

The document US 2003/121826 A1 discloses a catalyst comprising cobalt and ruthenium being applied on activated carbon as support. However, the use of carbon nanotubes is not mentioned.

However, the use of the mentioned supports within a catalyst gives rise for a number of problems when the catalyst is used during FT synthesis. These problems occur due to a low surface area of the support material, formation of compounds resulting from reaction from cobalt with the support material and a low dispersion of the active metal. Still further, the cobalt loading is limited in the known catalysts due to the low surface area of the support material.

It is the object of the invention to make use of carbon nanotubes (CNTs) within a catalyst, however, without need of any further support material that may give rise to the above described disadvantages.

It has surprisingly found that carbon nanotubes with their unique structural properties are suited as a novel support media for catalysts useful for heterogeneous catalysis The advantages of making use of CNTs as support material in cobalt or ruthenium catalysts with avoiding other support material become due to the properties of the CNT support material that possess both, a high surface area and good electronic conductivity, which gives rise to superior properties when compared to conventional support material.

Still further, the CNT support material present in the catalysts according to the invention allow to achieve a high dispersion of the active metal, i.e. cobalt and ruthenium, and still further allowing a high metal loading.

The problem that with a higher metal content, in particular cobalt content, the bulk formation of cobalt metal tends to occur can be avoided.

The new and advantageous catalysts according to the invention comprise carbon nanotubes (CNTs) with an average surface area of from 600 to 900 m²/g as support material in catalysts still further comprising cobalt and ruthenium as a metal and optionally one ore more alkali metal as described in the claims. The additional alkali metal preferably is selected from the group consisting of Na, K, Rb, and Cs. Within the catalyst according to the invention, cobalt and ruthenium and optionally the alkali metal are dispersed on the CNTs.

Making use of CNTs as support material In, for example, a cobalt catalyst leads to well-dispersed metal clusters, and a higher cobalt content can be achieved. Still further, the aglomeration of cobalt clusters can be decreased when compared to catalysts disclosed in the art making use of ordinary supports different from CNTs.

The advantageous properties of the new catalyst according to the present invention lead to a specific activity of the catalyst, for example the selectivity for liquid hydrocarbons, such as hydrocarbons having 5 or more carbon atoms, during an FT process is increased significantly when compared to conventional catalysts. The new catalyst according to the present invention can still further avoid undesired interactions between the metal, such as cobalt, ruthenium and the alkali metal, if present, and the support. Such interactions are to be avoided since they give raise to negative catalyst performance and accelerate catalyst deactivation.

The support material shows an influence on the orientation of, for example, cobalt crystals present in the catalyst. In this regards, the chemical nature of the support material, its surface properties (acidic or basic) and its texture are important. For inert support material, the chain growth probability for desired hydrocarbons (with 5 carbon atoms or more) during FT synthesis and the formation of saturated hydrocarbons is favored by the presence of nanopores due to slower diffusion. Also, the residence time of the formed products is enhanced by readsorption and secondary reactions.

The new catalyst according to the present invention is suitable for use as a catalyst during Fischer-Tropsch synthesis. It provides a high active surface area and exhibits superior performance towards the selective production of long chain hydrocarbons from synthesis gas.

As mentioned before, the catalyst according to the invention comprises cobalt and ruthenium and optionally one or more additional alkali metal, preferably selected from Na, K, Rb, and Cs. All of these elements being dispersed on a CNT support, wherein the CNT support material has an average metals Surface area of from 600-900 m²/g

The catalyst can be prepared by impregnation or chemical vapor deposition of the metals onto the carbon nanotube support. Such processes are in principle known in the art and within the skilled persons' knowledge.

The cobalt content of a cobalt catalyst according to the invention after calcination (heat treatment at between 200 to 500 °C), expressed as weight of cobalt based on the weight of the catalyst, is between 1 and 60 % by weight and preferably between 30 and 50% by weight. The amount of ruthenium is calculated based on the amount of cobalt, and suited amounts can be between 0.1 and 2% by weight and preferably between 0.5 and 1 by weight. If an alkali metal is present in the catalyst, the amount of the element is calculated based on the amount of cobalt and/or ruthenium present in the catalyst. Suited amounts are between 0 and 3% by weight and preferably between 0.1 and 1% by weight.

Cobalt, ruthenium and probably the alkali metal are distended on carbon nanotubes. The high surface area and also high pore volumes lead to advantageous properties of the catalyst according to the invention. The carbon nanotubes support material has an average surface area of 600 to 900 m²/g, The average pore size is preferably 4 to 8 nm, and the average pore volume is preferably 0.8 -1.2 cm³/g. Also it has a low acidity and high purity. The content of elements such as sulphur and phosphorous that have an undesirable effect on catalytic activity is preferrably low and most preferred such elements are not present at all.

The carbon nanotubes support used in the catalyst according to the invention can be prepared by any method know to the skilled person, who will make use of a suited one.

In particular, the CNTs useful in the catalysts of the invention can be prepared by a chemical vapor deposition (CVD) method over a cobalt-molybdenum on nano porous magnesium oxide (Co-Mo/MgO) catalyst. Such a catalyst is new and the catalyst as well as a process for producing the same is described in detail in European patent application EP 1782884.

For producing particular suited CNTs with the new (Co-Mo/MgO) catalyst the molar ratio of the metals cobalt and molybdenum on the nanoporous MgO support is preferrably Co:Mo:Mg 5 to 2.5 to 92.5. Such a catalyst is suited to produce high quality single-walled carbon nanotubes that are useful in the catalyst according to the invention.

Synthesis of carbon nanotubes can be conducted in a fluidized bed reactor. The catalyst is placed in the reactor and natural gas is introduced into the reactor. A natural gas decomposition reaction is conducted at ambient pressure, 900 to 1000 °C temperature with a holding time of from 20 to 50 minutes. Then natural gas stream is turned off and the product is cooled down in a flow of nitrogen. The product (CNTs and catalyst) is removed from the reactor, purified with hydrocloric acid (HCl) and filtered. It is then washed with de-ionized water and dried at 120 °C. The carbon nanotubes are oxidized at 400°C to remove amorphous carbon.

Then 8 to 15 wt% of cobalt based on the total weight of the catalyst are deposited on the CNTs by during the preparation of the CNTs. As mentioned, the carbon nanotubes can be prepared, for example, by a CVD (chemical vapor deposition) method. The method of depositing the remaining required amount of cobalt, ruthenium and probably alkali metal on the carbon nanotubes support can be achieved by a wet impregnation process. During such a process the metal salts are disolved in a suitable solvent just sufficiently to fill the pores of the carbon nanotubes support. The active metals and the optional alkali metal can be deposited on the support using an aqueous or organic solution. The most preferred cobalt compound is cobalt nitrate and a preferred ruthenium compound is ruthenium (III) nitrosyl nitrate. Suited alkali salts for incorporating alkali metals into the catalyst are nitrate, chloride and hydroxide salts of these elements. After aqueous impregnation, the catalyst is dried at 80 to 120°C for 2 to 4 hours. When organic solvents as wet impregnation agents are used, the catalyst is preferrably dried in two steps, namely first at 50 to 65 °C under reduced pressure and then at 80 to 120°C for 2 to 4 hours.

The dried catalyst is calcinated under a flow of air by slowly increasing the temperature to an upper limit of between 250 to 450°C. The rate of temperature increase is 1°C per minute, and the catalyst is held at the highest temperature for a period of 3 to 5 hours. The wet impregnation is repeated as many times as necessary to obtain a catalyst with the desired content of metals.

Before use, the calcinated catalyst is reduced by hydrogen or carbon monoxide or both used as reducing agent. The reduction can be achieved by flowing of at least one reducing agent admixed with an inert gas or mixture of them in a molar ratio of from 0.1 to 1 and 1 to 1 at pressures between 0.1 to 20 bar. The reducing gas flow rate is preferrably between 20-60 cm³/min per gram of the catalyst. The temperature is increased at a rate of 1°C per minute from ambient to a maximum level of 250 to 400°C and maintained at the maximum temperature for about 12 to 24 hours. Finally, well dispersed cobalt clusters with an average size of from 3 to 6 nm are obtained.

The catalyst according to the invention can be used during hydrocarbon synthesis in an FT process. When syngas as a feedstream is introduced into a catalyst bed comprising a catalyst as claimed according to the invention, pressure, space velocity, temperature and H₂/CO molar ratio are adjusted as suited for hydrocarbon synthesis.

The FT-reactor can be a fixed bed, an ebullating bed, fluidized bed or a slurry bubble column reactor. For a fixed or ebullating bed reactor the catalyst particle size is preferrably in the range of from 0.1 to 10 mm and for the fluidized bed or slurry bubble column reactors the size is between 0.020 to 0.100 mm.

The molar ratio of H₂:CO is preferrably between 1.5 to 1 up to 2.5 to 1. The reaction temperature is preferably between 180 and 250°C and the pressure is preferrably between 1 and 40 bar. The volume of synthesis gas per weight unit of catalyst per hour, measured at a standard temperature and preassure, is preferrably between 5 and 20 m³/kg/h.

Using CNTs as support material in the cobalt catalyst in accordance with the present invention, well dispersed metal clusters lead to a high surface area and high pore volume, and high cobalt contents can be loaded on the support still further agglomeration of cobalt clusters can be lowered compared to ordinary support materials. As mentioned before, negative effects of interaction between metal and support, which results in bad catalyst performance, are reduced. Still further, using CNT as support material in a cobalt based FT catalyst leads to a lower reduction temperature of the cobalt oxides and the above-mentioned properties result in a high catalytic activity, high C₅⁺ selectivity and a low catalyst deactivation rate during the FT process. The hydrocarbon yield and selectivity during a FT process when making use of the catalysts according to the invention is significantly higher than the yield that can be achieved by cobalt catalysts making use of different organic and inorganic supports. In addition, the higher activity is simultaneously accompanied by a desired increased selectivity toward heavier hydrocarbons, for example having 5 carbon atoms or more.

The catalyst of this invention and its production and use are further described in the following examples which do not limit the invention:

### Examples:

### General Procedures

Each catalyst sample was treated with hydrogen prior to use in a Fischer-Tropsch reaction.

The catalyst samples were placed in a small fixed bed reactor and purged with 100 cm³/min nitrogen at room temperature for 15 minutes. The sample was then heated with 30 to 50 cm³/min per gram of catalyst of hydrogen at increasing temperatures (1 °C/min) starting at ambient temperature up to 100 °C and held at this temperature for one hour. The catalysts were then heated at increasing temperatures (1 °C/min) up to 400 °C and held at 400 °C for 12 hours under hydrogen flow of 30 to 50 cm³/min per gram of the catalyst. The samples were then cooled under hydrogen and purged with nitrogen before use.

Synthesis gas (H₂/CO=2) was passed over the catalyst bed at 22 bar pressure and 220°C temperature. The reactor effluent was cooled, gaseous products were sent to a gas chromatograph for analysis and the liquid products weighed and analyzed for C₅ to C₄₀ hydrocarbons. The catalysts were compared based on the results of runs for a period of 48 hours on stream. Based on the analysis, CO conversion and product selectivity were determined.

### Example 1 - Comparative Example

### Catalyst N1

20 wt% cobalt based on the total weight of the catalyst were loaded on γ-Al₂O₃ support (surface area=200 m²/g) by a wet impregnation process making use of an aqueous solutions of cobalt nitrate. After impregnation the catalyst was dried at 120°C and calcinated at 450°C for 3 h with a heating rate of 1°C/min.

### Example 2 - Comparative Example

### Catalyst N2

20 wt% cobalt based on the total weight of the catalyst was loaded on a carbon nanotube support available by RIPI (CNT1 support) with a surface area of 800 m²/g).

The method of catalyst preparation, drying and calcination process was analogue to the process described for the preparation of the comparative catalyst N1.

### Example 3

### Catalyst N3 according to the invention

20 wt% cobalt and 0.5 wt% ruthenium based on the total weight of the catalyst were loaded CNT1 support. The method of catalyst preparation, drying and calcination process was again analogue to the process described for the preparation of the comparative catalyst N1.

### Example 4 - Comparative Example

### Catalyst N4

20 wt% cobalt and 0.25 wt% of potassium based on the total weight of the catalyst were loaded on RIPI-CNT1 support. The method of catalyst preparation, drying and calcination process was again analogue to the process described for the preparation of the comparative catalyst N1.

### Example 5 - Comparative Example

### Catalyst N5

30 wt% cobalt was loaded on γ-Al₂O₃ support. The method of catalyst preparation, drying and calcination process was again analogue to the process described for the preparation of the comparative catalyst N1.

### Example 6 Comparative Example

### Catalyst N6

30 wt% cobalt based on the total weight of the catalyst were loaded on CNT1 support. The method of catalyst preparation, drying and calcination process was again analogue to the process described for the preparation of the comparative catalyst N1.

### Example 7

FT process as described under the general procedures above with results of the synthesis at 220 °C and 22 bar:
Table 1 compared the results of the Fischer-Tropsch activity for the catalysts according to the invention based on CNT support material compared with γ-Al₂O₃ support:

**Table 1**

| Catalyst | CO Conversion (%) | C₅⁺ Selectivity (%) | Specific activity** |
|---|---|---|---|
| N1* | 35.9 | 81.8 | 720 |
| N2 | 65.7 | 82.2 | 1315 |
| N3 | 70.3 | 83.1 | 1400 |
| N4 | 60.1 | 87.6 | 1198 |
| N5* | 53 | 82.3 | 705 |
| N6 | 94.1 | 82.4 | 1255 |

| | | | |
|---|---|---|---|
| * being catalysts according to the comparative examples **mmol CO converted per gram of cobalt (total) per hour | | | |

From Table 1 it clearly appears that making use of the catalysts according to the invention making use of CNTs as support material results in a significant increase of the specific activity of the catalyst (an almost two fold increase of CO converted per gram of the active metal can be observed.

Still further, the selectivity towards higher molecular weight products is enhanced.

The results shown in Table 1 above also suggest that addition of Ru enhances the selectivity towards hydrocarbons with more than 5 carbon atoms as well as the activity of the catalyst. Hence, the present invention refers to a catalyst based on CNT support having an average surface area of from 600 to 900 m²/g making use of cobalt and ruthenium.

It seems furthermore from Table 1 above that adding an alkali metal enhances the selectivity of the synthesis products. Consequently, embodiments making use of at least one alkali metal in addition to cobalt and ruthenium within the catalyst according to the invention are preferred. In particular preferred are catalysts making use of potassium as additional alkali metal.

## Claims

1. A catalyst for conversion of synthesis gas to a mixture of hydrocarbons during a FT-process comprising cobalt and ruthenium dispersed on a support material consisting of carbon nanotubes (CNT), wherein the CNT support material has an average surface area of from 600 to 900 m²/g.

2. The catalyst according to claim 1, wherein the catalyst comprises one or more alkali metal.

3. The catalyst according to claim 1 or 2, wherein the support material has an average pore size of from 4 to 8 nm.

4. The catalyst according to one or more of the preceding claims, wherein the support material has an average pore volume of 0.8 to 1.2 cm³/g.

5. The catalyst according to one or more of the preceding claims, wherein the cobalt content, expressed by weight % of cobalt based on the total weight of the catalyst, is between 1 and 60% by weight.

6. The catalyst according to one or more of the preceding claims, wherein the dispersed cobalt clusters have an average size of from 3 to 6 nm.

7. The catalyst according to one or more of the preceding claims, wherein the ruthenium content, expressed by weight % of ruthenium based on the amount of cobalt present in the catalyst, is between 0.1 to 2% by weight.

8. The catalyst according to one or more of the preceding claims 2 to 7, wherein the alkali metal content, expressed by weight % of alkali metal based on the amount of cobalt and/or ruthenium present in the catalyst, is between 0 to 3% by weight.

9. The catalyst according to one or more of the preceding claims, wherein no additional support material is present.

10. A Fischer-Tropsch process making use of a catalyst as claimed in one ore more of the preceding claims, comprising the step of passing a gaseous composition over the catalyst, wherein the gaseous composition comprises CO and H₂, for forming a hydrocarbon.

11. The process according to claim 10, wherein the catalyst undergoes a pre-reduction reaction prior to use.

12. The process according to claim 11, wherein the pre-reduction reaction is carried out by contacting the catalyst with at least one reducing agent and an inert gas or mixture of inert gases.

13. The process according to claim 12, wherein the reducing agent is selected from one ore more of carbon monoxide and hydrogen.

14. The process according to one or more of claims 11 to 13 wherein the pre-reduction reaction is carried out at temperatures between 250 to 400 °C and at pressures between 0.1 and 20 bar.

## Patentansprüche

1. Katalysator zum Umwandeln von Synthesegas in ein Gemisch von Kohlenwasserstoffen während einem FT-Verfahren, umfassend Cobalt und Ruthenium, dispergiert auf einem Trägermaterial, welches aus Kohlenstoffnanoröhren (CNT) besteht, wobei das CNT-Trägermaterial eine mittlere Oberfläche von 600 bis 900 m²/g aufweist.

2. Katalysator gemäß Anspruch 1, wobei der Katalysator ein oder mehr Alkalimetalle umfasst.

3. Katalysator gemäß Anspruch 1 oder 2, wobei das Trägermaterial eine mittlere Porengröße von 4 bis 8 nm aufweist.

4. Katalysator gemäß einem oder mehreren der vorhergehenden Ansprüche, wobei das Trägermaterial ein mittleres Porenvolumen von 0,8 bis 1,2 cm³/g aufweist.

5. Katalysator gemäß einem oder mehreren der vorhergehenden Ansprüche, wobei der Cobalt-Gehalt, ausgedrückt in Gew.-% Cobalt bezogen auf das Gesamtgewicht des Katalysators, zwischen 1 und 60 Gew.-% liegt.

6. Katalysator gemäß einem oder mehreren der vorhergehenden Ansprüche, wobei die dispergierten Cobalt-Cluster eine mittlere Größe von 3 bis 6 nm aufweisen.

7. Katalysator gemäß einem oder mehreren der vorhergehenden Ansprüche, wobei der Ruthenium-Gehalt, ausgedrückt in Gew.-% Ruthenium bezogen auf die Menge an Cobalt, die in dem Katalysator vorhanden ist, zwischen 0,1 bis 2 Gew.-% liegt.

8. Katalysator gemäß einem oder mehreren der vorhergehenden Ansprüche 2 bis 7, wobei der Alkalimetall-Gehalt, ausgedrückt in Gew.-% Alkalimetall bezogen auf die Menge an Cobalt und/oder Ruthenium, die in dem Katalysator vorhanden ist, zwischen 0 bis 3 Gew.-% liegt.

9. Katalysator gemäß einem oder mehreren der vorhergehenden Ansprüche, wobei kein zusätzliches Trägermaterial vorhanden ist.

10. Fischer-Tropsch-Verfahren, welches einen Katalysator wie in einem oder mehreren der vorhergehenden Ansprüche beansprucht verwendet, umfassend den Schritt von Passieren einer gasförmigen Zusammensetzung über den Katalysator, wobei die gasförmige Zusammensetzung CO und H₂ umfasst, zum Bilden eines Kohlenwasserstoffes.

11. Verfahren gemäß Anspruch 10, wobei der Katalysator vor der Verwendung eine Vorreduktionsreaktion durchläuft.

12. Verfahren gemäß Anspruch 11, wobei die Vorreduktionsreaktion durch Inkontaktbringen des Katalysators mit mindestens einem Reduktionsmittel und einem Inertgas oder Gemisch von Inertgasen durchgeführt wird.

13. Verfahren gemäß Anspruch 12, wobei das Reduktionsmittel aus einem oder mehr von Kohlenmonoxid und Wasserstoff ausgewählt ist.

14. Verfahren gemäß einem oder mehreren der Ansprüche 11 bis 13, wobei die Vorreduktionsreaktion bei Temperaturen zwischen 250 bis 400°C und bei Drucken zwischen 0,1 und 20 bar durchgeführt wird.

## Revendications

1. Catalyseur pour la conversion d'un gaz de synthèse en un mélange d'hydrocarbures pendant un procédé FT comprenant du cobalt et du ruthénium dispersés sur un matériau support constitué de nanotubes de carbone (NTC), le matériau support en NTC possédant une surface moyenne de 600 à 900 m²/g.

2. Catalyseur selon la revendication 1, le catalyseur comprenant un ou plusieurs métaux alcalins.

3. Catalyseur selon la revendication 1 ou 2, dans lequel le matériau support possède une granulométrie moyenne de 4 à 8 nm.

4. Catalyseur selon une ou plusieurs des revendications précédentes, dans lequel le matériau support possède un volume moyen de pores de 0,8 à 1,2 cm³/g.

5. Catalyseur selon une ou plusieurs des revendications précédentes, dans lequel la teneur en cobalt, exprimée en % en poids de cobalt en fonction du poids total du catalyseur, est comprise dans la plage allant de 1 à 60 % en poids.

6. Catalyseur selon une ou plusieurs des revendications précédentes, dans lequel les agglomérats de cobalt dispersés ont une taille moyenne de 3 à 6 nm.

7. Catalyseur selon une ou plusieurs des revendications précédentes, dans lequel la teneur en ruthénium, exprimée en % en poids du ruthénium en fonction de la quantité de cobalt présent dans le catalyseur, est comprise dans la plage allant de 0,1 à 2 % en poids.

8. Catalyseur selon une ou plusieurs des revendications précédentes 2 à 7, dans lequel la teneur en métal alcalin, exprimée en % en poids de métal alcalin en fonction de la quantité de cobalt et/ou de ruthénium présents dans le catalyseur, est comprise dans la plage allant de 0 à 3 % en poids.

9. Catalyseur selon une ou plusieurs des revendications précédentes, dans lequel aucun matériau support supplémentaire est présent.

10. Procédé de Fischer-Tropsch utilisant un catalyseur selon une ou plusieurs des revendications précédentes, comprenant l'étape de passage d'une composition gazeuse sur le catalyseur, la composition gazeuse comprenant du CO et de l'H₂, pour former un hydrocarbure.

11. Procédé selon la revendication 10, dans lequel le catalyseur subit une réaction de pré-réduction avant son utilisation.

12. Procédé selon la revendication 11, dans lequel la réaction de pré-réduction est réalisée par la mise en contact du catalyseur avec au moins un agent de réduction et un gaz inerte ou un mélange de gaz inertes.

13. Procédé selon la revendication 12, dans lequel l'agent de réduction est choisi parmi le monoxyde de carbone et/ou l'hydrogène.

14. Procédé selon une ou plusieurs des revendications 11 à 13, dans lequel la réaction de pré-réduction est réalisée à une température comprise entre 250 et 400 °C et à des pressions comprises entre 0,1 et 20 bars.
